# EUROPÄISCHE PATENTSCHRIFT

(11) **EP 2 769 794 B1**
(45) Veröffentlichungstag und Bekanntmachung des Hinweises auf die Patenterteilung: **01.03.2017**
(21) Anmeldenummer: 14151239.2
(22) Anmeldetag: 15.01.2014
(51) Int. Cl.: B23G 1/46

(54) **GEWINDESCHNEIDAPPARAT**
THREAD CUTTING APPARATUS
DISPOSITIF DE TARAUDAGE

(30) Priorität: 21.02.2013 DE 202013100786 U
(43) Veröffentlichungstag der Anmeldung: 27.08.2014
(73) Patentinhaber: C. & E. Fein GmbH, 73529 Schwäbisch Gmünd-Bargau (DE)
(72) Erfinder: Woecht, Norbert, 73560 Böbingen (DE); Walz, Frank, 73540 Heubach (DE)
(74) Vertreter: Meitinger, Thomas Heinz

(56) Entgegenhaltungen:
- CH-A- 539 485
- FR-A- 785 873
- GB-A- 742 637
- US-A- 4 832 542

## Beschreibung

### GEBIET DER ERFINDUNG

Die vorliegende Erfindung betrifft einen Gewindeschneidapparat gemäß dem Oberbegriff des Anspruchs 1 mit einem Planetengetriebe zum Erzeugen entgegengesetzter Drehrichtungen zur Verwendung mit einer handgeführten Werkzeugmaschine.

### HINTERGRUND DER ERFINDUNG

Im Stand der Technik sind Vorrichtungen zum Gewindeschneiden bekannt. Das Dokument GB 742,637 beschreibt ein Zubehör für eine Maschine zum Gewindeschneiden, wobei das Zubehör derartige rotierende und nichtrotierende Elemente aufweist, dass in einem langsamen Vorwärtsgang das Gewinde geschnitten werden kann und in einem schnelleren Rückwärtsgang die Schneiden des Zubehörs aus dem geschnittenen Gewinde herausgefahren werden können.

### ZUSAMMENFASSUNG DER ERFINDUNG

Das Gewindeschneiden umfasst im Wesentlichen mindestens zwei Arbeitsabschnitte, zum einen das eigentliche Gewindeschneiden und zum anderen das Herausfahren der Gewindeschneidvorrichtung aus dem geschnittenen Gewinde. Beim zweiten Abschnitt ist insbesondere darauf zu achten, dass das zuvor geschnittene Gewinde nicht beschädigt wird. Aufgrund des mindestens zweistufigen Arbeitsablaufs stellt das Gewindeschneiden einen zeitaufwändigen Arbeitsgang dar.

Eine Aufgabe ist daher, eine Vorrichtung zum Gewindeschneiden zur Verfügung zu stellen, die ein effektives und zeitlich schnelles Schneiden von Gewinden ermöglicht.

Gemäß der Erfindung wird ein Gewindeschneidapparat zur Verfügung gestellt, umfassend eine Vorrichtung zum Gewindeschneiden eines Werkstücks mit einem Planetengetriebe zum Erzeugen entgegengesetzter Drehrichtungen zur Verwendung mit einer handgeführten Werkzeugmaschine, wobei das Planetengetriebe umfasst: ein Hohlrad zum Erzeugen einer Rotation mit einer ersten Drehrichtung, ein Sonnenrad zum Erzeugen einer Rotation mit einer zweiten Drehrichtung, wobei die erste Drehrichtung zur zweiten Drehrichtung entgegengesetzt ist und ein Abtriebsrad, wobei das Abtriebsrad innerhalb der Vorrichtung axial verschiebbar ist, wobei das Abtriebsrad in einer ersten Position mit dem Sonnenrad eingekuppelt ist und in einer zweiten Position mit dem Hohlrad eingekuppelt ist, wobei das Abtriebsrad durch ein Element in die erste Position verschiebbar ist und wobei das Abtriebsrad durch einen Anpressdruck der Vorrichtung auf das Werkstück in die zweite Position verschiebbar ist und einen Motor, insbesondere einen Elektromotor, zum Antreiben des Hohlrad, wobei das Abtriebsrad jeweils über eine symmetrisch ausgebildete Kupplung mit einer Flügel-Nocken-Anordnung der Vorrichtung angetrieben wird, sodass die Vorrichtung sowohl zum Rechtsgewindeschneiden als auch zum Linksgewindeschneiden geeignet ist.

Durch die Verwendung eines Planetengetriebes kann eine Vorrichtung zur Verfuegung gestellt werden, die eine Rotationsrichtungsumkehr des Abtriebsrads ermöglicht. Zudem kann durch die Ausbildung der Vorrichtung mit Planetenrädern zum Antrieb des Sonnenrads ein schnelles Herausfahren der Vorrichtung aus dem geschnittenen Gewinde realisiert werden. Erfindungsgemäß kann durch einen Anpressdruck die Vorrichtung in die Gewindeschneidsituation gebracht werden, wodurch automatisch, ohne dass beispielsweise ein Schalter betätigt werden muss, der Gewindeschneidvorgang initiiert werden kann. Nach dem Gewindeschneiden wird kein Anpressdruck mehr auf das Werkstück über die Vorrichtung ausgeübt und die Vorrichtung wird selbsttätig in einen Schnellrücklaufzustand überfährt. Durch die selbsttätige Überführung der Vorrichtung in unterschiedliche Betriebszustände kann ein effektives Gewindeschneiden ermöglicht werden.

Beispielhafte Ausführungsformen werden in den abhängigen Ansprüchen beschrieben.

Gemäß einer beispielhaften Ausführungsform der Erfindung wird eine Vorrichtung zur Verfügung gestellt, wobei das Sonnenrad durch ein oder mehrere Planetenräder antreibbar ist, wobei die Planetenräder durch das Hohlrad antreibbar sind.

In einer weiteren erfindungsgemäßen Ausführungsform wird eine Vorrichtung zur Verfügung gestellt, wobei in der zweiten Position ein Gewindeschneiden ermöglicht wird und in der ersten Position ein Schnellrücklauf ermöglicht wird.

Vorteilhafterweise muss nur das Hohlrad angetrieben werden, um ein Gewindeschneiden (Antrieb des Abtriebsrads durch das Hohlrad) und einen Rücklauf (Antrieb des Abtriebsrads durch das Sonnenrad) zu realisieren. Durch den Einsatz von Planetenrädern kann ferner ein schneller Rücklauf ermöglicht werden, wodurch der Arbeitsgang zeitlich verkürzt werden kann.

Gemäß einem weiteren Ausführungsbeispiel der vorliegenden Erfindung wird eine Vorrichtung zur Verfügung gestellt, wobei das Sonnenrad und das Hohlrad axial fest sind.

Durch die Ausbildung einer Vorrichtung mit einem axial verschiebbaren Abtriebsrad und einem Sonnenrad und einem Hohlrad, die axial fest sind, kann eine herstellungstechnisch einfache Ausführungsform zur Verfügung gestellt werden, um ein abwechselndes Einkuppeln des Abtriebsrads mit dem Sonnenrad bzw. dem Hohlrad zu realisieren.

Erfindungsgemäß wird eine Vorrichtung zur Verfügung gestellt, wobei das Abtriebsrad ein oder mehrere Flügel und das Hohlrad ein oder mehrere Nocken zur Kupplung miteinander aufweisen oder wobei das Abtriebsrad ein oder mehrere Nocken und das Hohlrad ein oder mehrere Flügel zur Kupplung miteinander aufweisen.

In einer weiteren erfindungsgemäßen Ausführungsform wird eine Vorrichtung zur Verfügung gestellt, wobei das Abtriebsrad ein oder mehrere Flügel und das Sonnenrad ein oder mehrere Nocken zur Kupplung miteinander aufweisen oder wobei das Abtriebsrad ein oder mehrere Nocken und das Sonnenrad ein oder mehrere Flügel zur Kupplung miteinander aufweisen.

Durch die Ausformung von Nocken mit entsprechenden Flügeln kann ein Kupplungszustand des Abtriebsrads mit dem Hohlrad bzw. dem Sonnenrad erzielt werden, der axialkraftfrei ist und sich selbst zentriert.

Gemäß einem weiteren Ausführungsbeispiel der vorliegenden Erfindung wird eine Vorrichtung zur Verfügung gestellt, wobei das Element eine Feder ist.

Eine Feder stellt eine herstellungstechnisch einfache Möglichkeit dar, um ein Einkuppeln des Abtriebsrads mit dem Sonnenrad bei fehlendem Anpressdruck sicherzustellen.

Gemäß einem weiteren Ausführungsbeispiel der vorliegenden Erfindung wird ein Gewindeschneidapparat zur Verfügung gestellt, wobei die Kupplung jeweils drei Flügel mit drei entsprechenden Nocken aufweist.

Durch die Ausbildung mit drei Nocken/Flügel-Paaren wird eine stabile Verbindung zwischen Abtriebswelle und Hohlrad bzw. Sonnenrad im eingekuppelten Zustand sichergestellt.

Als eine Idee der Erfindung kann angesehen werden, eine Vorrichtung zur Verfügung zu stellen, die einen Gewindeschneidvorgang zeitlich schnell vornehmen kann. Hierzu wird automatisch bei einem Anpressdruck der Vorrichtung auf ein zu bearbeitendes Werkstück das Abtriebsrad mit dem Hohlrad gekuppelt und beim Fehlen eines Anpressdrucks das Abtriebsrad mit dem Sonnenrad selbsttätig eingekuppelt. Ein Betätigen einer Schaltmöglichkeit ist nicht notwendig, um den Wechsel der Betriebszutsände herbeizuführen. Hierdurch kann der Arbeitsprozess zeitlich beschleunigt werden. Das Sonnenrad kann über Planetenräder vom Hohlrad angetrieben werden und so einen Schnellrücklauf realisieren, was zu einer weiteren zeitlichen Verkürzung der Arbeitsdauer führt.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen:
Fig. 1 eine schematische Darstellung eines Planetengetriebes für einen Gewindeschneidapparat, wobei das Abtriebsrad mit dem Sonnenrad gekuppelt ist,
Fig. 2 eine weitere schematische Darstellung des Planetengetriebes für den Gewindeschneidapparat, wobei das Abtriebsrad weder mit dem Hohlrad noch mit dem Sonnenrad gekuppelt ist,
Fig. 3 eine weitere schematische Darstellung des Planetengetriebes für den Gewindeschneidapparat, wobei das Abtriebsrad mit dem Hohlrad gekuppelt ist,
Fig. 4 eine Kupplungsanordnung mit Flügeln und Nocken,
Fig. 5 eine handgeführte Werkzeugmaschine in der die Vorrichtung zum Einbringen eines Gewindes angeordnet werden kann.

### DETAILLIERTE BESCHREIBUNG BEISPIELHAFTER

### AUSFÜHRUNGSFORMEN

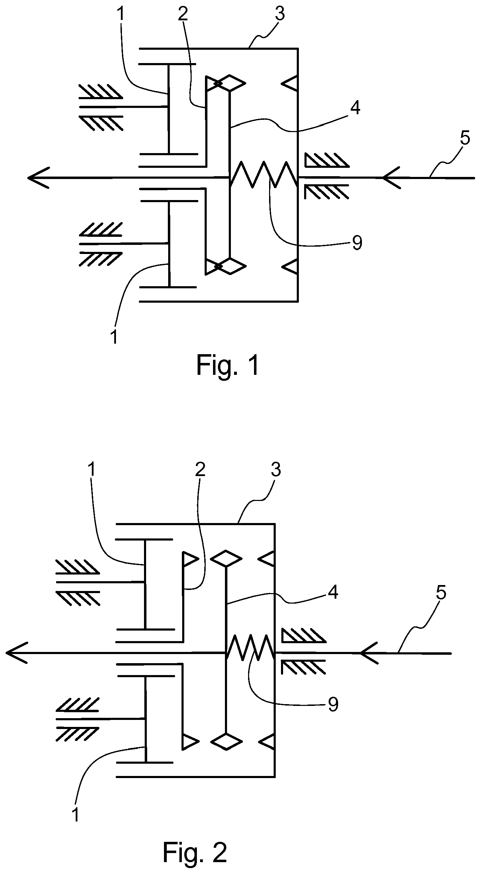

Fig. 1 zeigt eine schematische Darstellung einer erfindungsgemäßen Vorrichtung, wobei die Vorrichtung auf ein zu bearbeitendes Werkstück keinen Anpressdruck ausübt. Hierdurch ergibt sich, dass eine Feder 9 dafür sorgt, dass das Abtriebsrad 4 mit einem Sonnenrad/Sonne 2 gekoppelt/eingekuppelt wird. Der Antrieb erfolgt über das Hohlrad 3. Die Planetenräder 1 erzeugen eine Drehrichtungsumkehr, sodass die mit den Planetenrädern 1 gekuppelte Sonne 2 eine entgegengesetzte Rotationsrichtung im Vergleich zur Rotationsrichtung des Hohlrads 3 aufweist. Das Abtriebsrad 4 befindet sich daher in einem Schnellrücklaufzustand.

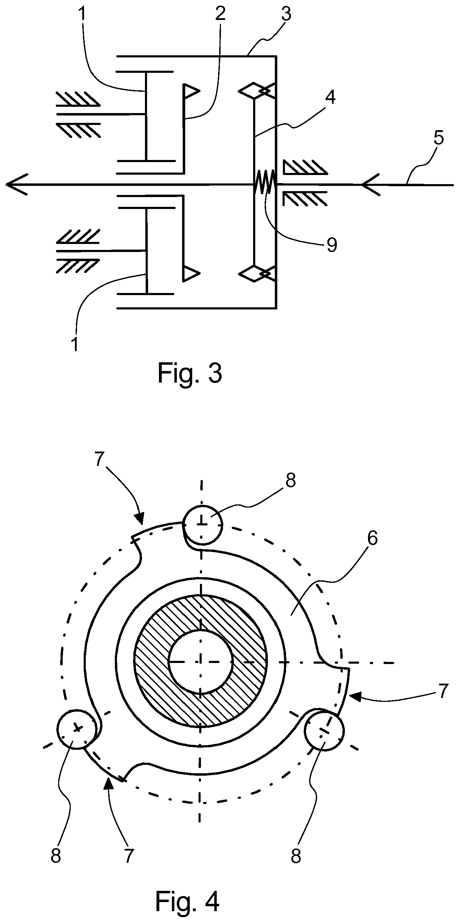

Fig. 2 zeigt eine Situation mit einem geringen Anpressdruck auf das Abtriebsrad 4. Hierdurch wird das Abtriebsrad 4 entkuppelt und ist weder mit dem Sonnenrad 2 noch mit dem Hohlrad 3 im Eingriff. Das Abtriebsrad 4 befindet sich daher im Leerlauf. Diese Situation kann als ein Übergang von einem Zustand ohne Anpressdruck, wie in Fig. 1 gezeigt, und einer Situation mit hohem Anpressdruck, wie in Fig. 3 dargestellt, betrachtet werden.

Fig. 3 zeigt eine Situation zum Gewindeschneiden bei der durch einen Anpressdruck der Vorrichtung auf das zu bearbeitende Werkstück das Abtriebsrad 4 in Eingriff mit dem Hohlrad 3 gerät. Hierdurch stellt sich ein Zustand der Vorrichtung zum Gewindeschneiden ein.

Wird die Vorrichtung auf ein Werkstück aufgesetzt und aufgepresst, ergibt sich ein Anpressdruck und das Abtriebsrad 4 wird entgegen der Federkraft der Feder 9 axial verschoben und mit dem Hohlrad 3 verkoppelt/eingekuppelt. Der Gewindeschneidvorgang wird gestartet. Hierbei entspricht die Abtriebsdrehzahl der Antriebsdrehzahl (Situation entsprechend Fig. 3). Nach dem Gewindeschneiden wird die Vorrichtung mit weniger Anpressdruck auf das Werkstück aufgebracht und die Feder 9 führt zu einer Entkupplung des Abtriebsrads 4 (Situation entsprechend Fig. 2). Nimmt der Anpressdruck weiter ab oder fehlt der Anpressdruck ganz, so führt die Federkraft der Feder 9 zu einer Einkupplung des Abtriebsrads 4 mit dem Sonnenrad 2. Das Sonnenrad 2 wird durch die Planetenräder 1 angetrieben und weist eine entgegengesetzte Drehrichtung zu der des Hohlrads 3 auf. Außerdem ist die Abtriebsdrehzahl in dieser Situation deutlich höher wie in der Situation des Gewindeschneidens aufgrund des Antriebs durch die Planetenräder 1. Hierdurch wird ein Schnellrücklauf aus der Bohrung des Werkstücks ermöglicht (Situation entsprechend Fig. 1).

Fig. 4 zeigt eine Kupplungsmöglichkeit mit drei Flügeln 7 und drei Nocken/Stiften 8. Aufgrund des symmetrischen Aufbaus der Kupplung kann ein drehrichtungsunabhängiger Antrieb des Abtriebsrads 6 durch das Sonnenrad bzw. das Hohlrad erfolgen. Hierdurch können sowohl Rechtsgewinde als auch Linksgewinde geschnitten werden. Die Kopplung ist axialkraftfrei und zentriert sich selbsttätig. Die Kupplungsmöglichkeit kann zur Kupplung des Abtriebsrads mit dem Hohlrad und/oder mit dem Sonnenrad genutzt werden. Das Abtriebsrad kann Nocken/Stifte oder Flügel aufweisen. Das Hohlrad bzw. das Sonnenrad ist entsprechend entweder mit Flügeln oder Nocken/Stifte ausgestattet.

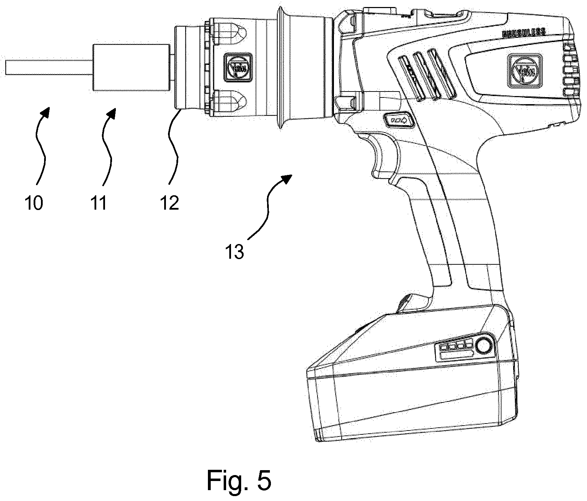

Fig. 5 zeigt eine Hand-Werkzeugmaschine 13 in deren Aufnahme 12 ein Werkzeugfutter 11 mit eingespanntem Drehwerkzeug 10 angeordnet werden kann. Die erfindungsgemäße Vorrichtung zum Gewindeschneiden eines Werkstücks mit einem Planetengetriebe kann innerhalb einer derartiger Hand-Werkzeugmaschine 13 angeordnet werden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Planetenrad
- 2: Sonnenrad
- 3: Hohlrad
- 4: Abtriebswelle
- 5: Antrieb
- 6: Abtriebsrad oder Hohlrad oder Sonnenrad
- 7: Flügel/Mitnehmer
- 8: Zylinderstift/Kupplungsnocke/Stift/Nocke
- 9: Feder
- 10: Drehwerkzeug
- 11: Werkzeugfutter
- 12: Aufnahme
- 13: Hand-Werkzeugmaschine

## Patentansprüche

1. Gewindeschneidapparat umfassend eine Vorrichtung zum Gewindeschneiden eines Werkstücks mit einem Planetengetriebe zum Erzeugen entgegengesetzter Drehrichtungen zur Verwendung mit einer handgeführten Werkzeugmaschine, wobei das Planetengetriebe umfasst: ein Hohlrad (3) zum Erzeugen einer Rotation mit einer ersten Drehrichtung,
ein Sonnenrad (2) zum Erzeugen einer Rotation mit einer zweiten Drehrichtung, wobei die erste Drehrichtung zur zweiten Drehrichtung entgegengesetzt ist und ein Abtriebsrad (4), wobei das Abtriebsrad (4) innerhalb der Vorrichtung axial verschiebbar ist, wobei das Abtriebsrad (4) in einer ersten Position mit dem Sonnenrad (2) eingekuppelt ist und in einer zweiten Position mit dem Hohlrad (3) eingekuppelt ist, wobei das Abtriebsrad (4) durch ein Element (9) in die erste Position verschiebbar ist und wobei das Abtriebsrad (4) durch einen Anpressdruck der Vorrichtung auf das Werkstück in die zweite Position verschiebbar ist und einen Motor, insbesondere einen Elektromotor, zum Antreiben des Hohlrads (3),
**dadurch gekennzeichnet, dass**
das Abtriebsrad (4) jeweils über eine symmetrisch ausgebildete Kupplung mit einer Flügel (7)-Nocken (8)-Anordnung der Vorrichtung angetrieben wird, sodass die Vorrichtung sowohl zum Rechtsgewindeschneiden als auch zum Linksgewindeschneiden geeignet ist.

2. Gewindeschneidapparat nach Anspruch 1, **dadurch gekennzeichnet, dass** das Sonnenrad (2) durch ein oder mehrere Planetenräder (1) antreibbar ist, wobei die Planetenräder (1) durch das Hohlrad (3) antreibbar sind.

3. Gewindeschneidapparat nach einem der Ansprüche 1 oder 2, **dadurch gekennzeichnet, dass** in der zweiten Position ein Gewindeschneiden ermöglicht wird und in der ersten Position ein Schnellrücklauf ermöglicht wird.

4. Gewindeschneidapparat nach einem der vorhergehenden Ansprüche, **dadurch gekennzeichnet, dass** das Sonnenrad (2) und das Hohlrad (3) axial fest sind.

5. Gewindeschneidapparat nach einem der vorhergehenden Ansprüche, **dadurch gekennzeichnet, dass** das Abtriebsrad (4) ein oder mehrere Flügel (7) und das Hohlrad (3) ein oder mehrere Nocken (8) zur Kupplung miteinander aufweisen oder wobei das Abtriebsrad (4) ein oder mehrere Nocken (8) und das Hohlrad (3) ein oder mehrere Flügel (7) zur Kupplung miteinander aufweisen.

6. Gewindeschneidapparat nach einem der vorhergehenden Ansprüche, **dadurch gekennzeichnet, dass** das Abtriebsrad (4) ein oder mehrere Flügel (7) und das Sonnenrad (2) ein oder mehrere Nocken (8) zur Kupplung miteinander aufweisen oder wobei das Abtriebsrad (4) ein oder mehrere Nocken (8) und das Sonnenrad (2) ein oder mehrere Flügel (7) zur Kupplung miteinander aufweisen.

7. Gewindeschenidapparat nach einem der vorhergehenden Ansprüche, **dadurch gekennzeichnet, dass** das Element (9) eine Feder ist.

8. Gewindeschneidapparat nach einem der vorhergehenden Ansprüche, **dadurch gekennzeichnet, dass** die Kupplung jeweils drei Flügel (7) mit drei entsprechenden Nocken (8) aufweist.

## Claims

1. Thread-cutting apparatus comprising a device for cutting a thread on a workpiece by means of a planetary gear for producing opposing directions of rotation for use with a hand-operated power tool, wherein the planetary gear comprises: a ring gear (3) to produce a rotation with a first direction of rotation, a sun gear (2) to produce a rotation in a second direction, wherein the first direction of rotation runs counter to the second direction of rotation, and an output gear (4), wherein the output gear (4) can be moved axially within the device, wherein the output gear (4) is coupled in a first position with the sun gear (2) and coupled in a second position with the ring gear (3) wherein the output gear (4) can be shifted into the first position by an element (9) and wherein the output gear (4) can be shifted by contact pressure of the device onto the workpiece and by a motor, especially an electric motor, to drive the ring gear (3),
**characterised in that** the output gear (4) is driven in each case via a symmetrically formed coupling with a lobe (7)-cam (8) arrangement of the device so that the device is suitable for cutting both right-hand and left-hand threads.

2. Thread-cutting apparatus according to claim 1, **characterised in that** the sun gear (2) can be driven by one or more planet gears (1), wherein the planet gears (1) can be driven by the ring gear (3).

3. Thread-cutting apparatus according to one of the claims 1 or 2, **characterised in that** a thread-cutting is enabled in the second position and a rapid reverse motion is enabled in the first position.

4. Thread-cutting apparatus according to one of the previous claims, **characterised in that** the sun gear (2) and the ring gear (3) are axially fixed.

5. Thread-cutting apparatus according to one of the previous claims, **characterised in that** the output gear (4) has one or more lobes (7) and that the ring gear (3) has one or more cams (8) for coupling them together or wherein the output gear (4) has one or more cams (8) and the ring gear (3) has one or more lobes (7) for the mutual coupling.

6. Thread-cutting apparatus according to one of the previous claims, **characterised in that** the output gear (4) has one or more lobes (7) and that the sun gear (2) has one or more cams (8) for coupling them together or wherein the output gear (4) has one or more cams (8) and the sun gear (2) has one or more lobes (7) for the mutual coupling.

7. Thread-cutting apparatus according to one of the previous claims, **characterised in that** the element (9) is a spring.

8. Thread-cutting apparatus according to one of the previous claims, **characterised in that** the coupling in each case has three lobes (7) with three corresponding cams (8).

## Revendications

1. Appareil de taraudage comprenant un dispositif pour le taraudage d'une pièce avec un engrenage planétaire destiné à générer des sens de rotation opposés en vue d'une utilisation avec une machine-outil commandée manuellement, où l'engrenage planétaire comprend : une couronne (3) destinée à générer une rotation avec un premier sens de rotation, une roue solaire (2) destinée à générer une rotation avec un deuxième sens de rotation, le premier sens de rotation étant contraire au deuxième sens de rotation, et une roue menée (4), la roue menée (4) étant axialement mobile à l'intérieur du dispositif, la roue menée (4) étant accouplée à la roue solaire (2) dans une première position et accouplée à la couronne (3) dans une deuxième position, la roue menée (4) étant déplaçable vers la première position par l'élément (9) et la roue menée (4) étant déplaçable vers la deuxième position par une pression de serrage du dispositif sur la pièce et par un moteur, en particulier un moteur électrique pour l'entraînement de la couronne (3), **caractérisé en ce que**
la roue menée (4) est entraînée au moyen d'un accouplement réalisé symétriquement avec un agencement à ailettes (7) et cames (8) du dispositif, si bien que le dispositif est adapté à la taille de filets à droite aussi bien qu'à celle de filets à gauche.

2. Appareil de taraudage selon la revendication 1, **caractérisé en ce que** la roue solaire (2) est entraînable par une ou plusieurs roues planétaires (1), les roues planétaires (1) étant entraînables par la couronne (3).

3. Appareil de taraudage selon la revendication 1 ou la revendication 2, **caractérisé en ce qu'**un taraudage est rendu possible dans la deuxième position, et un retour rapide est rendu possible dans la première position.

4. Appareil de taraudage selon l'une des revendications précédentes, **caractérisé en ce que** la roue solaire (2) et la couronne (3) sont axialement fixes.

5. Appareil de taraudage selon l'une des revendications précédentes, **caractérisé en ce que** la roue menée (4) comporte une ou plusieurs ailettes (7) et la couronne (3) une ou plusieurs cames (8) pour accouplement entre elles, ou **en ce que** la roue menée (4) comporte une ou plusieurs cames (8) et la couronne (3) une ou plusieurs ailettes (7) pour accouplement entre elles.

6. Appareil de taraudage selon l'une des revendications précédentes, **caractérisé en ce que** la roue menée (4) comporte une ou plusieurs ailettes (7) et la roue solaire (2) une ou plusieurs cames (8) pour accouplement entre elles, ou **en ce que** la roue menée (4) comporte une ou plusieurs cames (8) et la roue solaire (2) une ou plusieurs ailettes (7) pour accouplement entre elles.

7. Appareil de taraudage selon l'une des revendications précédentes, **caractérisé en ce que** l'élément (9) est un ressort.

8. Appareil de taraudage selon l'une des revendications précédentes, **caractérisé en ce que** l'accouplement comporte trois ailettes (7) avec trois cames (8) correspondantes.
